# EUROPÄISCHE PATENTSCHRIFT

(11) **EP 2 721 455 B1**
(45) Veröffentlichungstag und Bekanntmachung des Hinweises auf die Patenterteilung: **01.09.2021**
(21) Anmeldenummer: 12718641.9
(22) Anmeldetag: 26.04.2012
(51) Int. Cl.: G05D 1/02, G05B 15/02

(54) **SYSTEM MIT EINER BEGRENZUNGSLEITEREINHEIT UND EINER SELBSTSTÄNDIGEN MOBILEN EINHEIT**
SYSTEM INCLUDING A BOUNDARY WIRE AND AN INDEPENDENT MOBILE UNIT
SYSTÈME COMPRENANT UN CÂBLE DE DÉLIMITATION ET UNE UNITÉ MOBILE AUTONOME

(30) Priorität: 17.06.2011 DE 102011077673
(43) Veröffentlichungstag der Anmeldung: 23.04.2014
(73) Patentinhaber: Robert Bosch GmbH, 70442 Stuttgart (DE)
(72) Erfinder: PETEREIT, Steffen, 71691 Freiberg A. N. (DE); KOCH, Christoph, 70178 Stuttgart (DE); ALBERT, Amos, 71229 Leonberg (DE)
(86) Internationale Anmeldenummer: PCT/EP2012/057675
(87) Internationale Veröffentlichungsnummer: WO 2012/171704

(56) Entgegenhaltungen:
- WO-A1-99/15941
- WO-A2-03/065140
- GB-A- 1 417 858
- HOW J P ET AL: "Signal Architecture for a Distributed Magnetic Local Positioning System", IEEE SENSORS JOURNAL, IEEE SERVICE CENTER, NEW YORK, NY, US, Bd. 4, Nr. 6, 1. Dezember 2004 (2004-12-01), Seiten 864-873, XP011122381, ISSN: 1530-437X, DOI: 10.1109/JSEN.2004.833512
- None

## Beschreibung

### Stand der Technik

Es ist bereits aus der GB 1 417 858 A ein System mit einer Begrenzungsleitereinheit, die dazu vorgesehen ist, ein Begrenzungssignal auszusenden, und mit einer zumindest teilselbstständigen, mobilen Einheit, die sich in zumindest einem Zustand in einem vorgesehenen, auf zumindest einer Seite von der Begrenzungsleitereinheit begrenzten Bereich frei bewegt, wobei die mobile Einheit zumindest eine Empfangseinheit aufweist, mittels der sie das Begrenzungssignal empfängt, wobei die mobile Einheit eine Recheneinheit aufweist, die dazu vorgesehen ist, das Begrenzungssignal durch eine Kreuzkorrelation mit einem Korrelationsbitmuster auszuwerten, und wobei die Recheneinheit durch eine Auswertung des Begrenzungssignals eine Kenngröße ermittelt, die zumindest eine Überschreitung der Begrenzung bei der Überschreitung signalisiert, wobei die Begrenzungsleitereinheit zumindest einen Begrenzungsleiter aufweist, der zumindest eine Leiterschleife bildet, um eine zuverlässige Begrenzung und eine induktive Datenübertragung zu ermöglichen, wobei von der mobilen Einheit auch Daten durch das Begrenzungssignal empfangen werden, wobei die Datenübertragung eine Übertragung von zumindest einer Information von der Begrenzungsleitereinheit zu der mobilen Einheit ist, bekannt.

Aus *HOW J P et al.: "Signal Architecture for a Distributed Magnetic Local Positioning System",* aus WO 99/15941 A1 und aus WO 03/065140 A2 sind ebenfalls Systeme mit einer Begrenzungsleitereinheit und mit einer zumindest teilselbstständigen, mobilen Einheit bekannt.

### Offenbarung der Erfindung

Die Erfindung geht aus von einem System mit einer Begrenzungsleitereinheit, die dazu vorgesehen ist, ein Begrenzungssignal auszusenden, und mit einer zumindest teilselbstständigen, mobilen Einheit, die sich in zumindest einem Zustand in einem vorgesehenen, auf zumindest einer Seite von der Begrenzungsleitereinheit begrenzten Bereich frei bewegt, wobei die mobile Einheit zumindest eine Empfangseinheit aufweist, mittels der sie das Begrenzungssignal empfängt, wobei die mobile Einheit eine Recheneinheit aufweist, die dazu vorgesehen ist, das Begrenzungssignal durch eine Kreuzkorrelation mit einem Korrelationsbitmuster auszuwerten, und wobei die Recheneinheit durch eine Auswertung des Begrenzungssignals eine Kenngröße ermittelt, die zumindest eine Überschreitung der Begrenzung bei der Überschreitung signalisiert, wobei die Begrenzungsleitereinheit zumindest einen Begrenzungsleiter aufweist, der zumindest eine Leiterschleife bildet, um eine zuverlässige Begrenzung und eine induktive Datenübertragung zu ermöglichen, wobei von der mobilen Einheit auch Daten durch das Begrenzungssignal empfangen werden, wobei die Datenübertragung eine Übertragung von zumindest einer Information von der Begrenzungsleitereinheit zu der mobilen Einheit ist.

Zudem wird vorgeschlagen, dass die Recheneinheit dazu vorgesehen ist, zumindest zwei unterschiedliche Korrelationsbitmuster für die Kreuzkorrelation zu erzeugen, wodurch konstruktiv einfach eine Datenübertragung und/oder eine gleichzeitige Verwendung von mehreren Systemen in räumlicher Nähe möglich sind, und dazu vorgesehen ist, bei einem Betrieb das empfangene Begrenzungssignal mit dem ersten Korrelationsbitmuster und dem zweiten Korrelationsbitmuster zu korrelieren, wobei die Recheneinheit dem ersten Korrelationsbitmuster einen Arbeitsmodus zuordnet, wobei der Arbeitsmodus eine Datenübertragung ist, die den Betriebszustand der mobilen Einheit bestimmt, bei dem die mobile Einheit eine Aufgabe, beispielsweise Rasenmähen, Putzen oder einen Aufenthaltsort überwachen, erledigt, und dem zweiten Korrelationsbitmuster einen Befehl zuordnet, wodurch eine besonders einfache Implementierung erreicht werden kann, wobei der Befehl eine Datenübertragung ist, die ein Verhalten der mobilen Einheit beeinflusst.

Unter einer "Begrenzungsleitereinheit" soll insbesondere eine Einheit verstanden werden, die mittels einer räumlichen Ausdehnung eines elektrischen Leiters einen Bereich auf zumindest einer Seite begrenzt. Vorzugsweise leitet ein Begrenzungsleiter einen elektrischen Strom, der mit dem Begrenzungssignal moduliert ist. Vorteilhaft verursacht der elektrische Strom ein mit dem Begrenzungssignal moduliertes Magnetfeld in dem von der Begrenzungsleitereinheit begrenzten Bereich. Unter "vorgesehen" soll insbesondere speziell programmiert, ausgelegt und/oder ausgestattet verstanden werden. Insbesondere soll unter einem "Begrenzungssignal" ein Signal verstanden werden, das zumindest eine Eigenschaft aufweist, die sich innerhalb des begrenzten Bereichs und außerhalb des begrenzen Bereichs unterscheidet. Vorzugsweise ist das Begrenzungssignal bei einem Betrieb in einem begrenzten Bereich empfangbar. Vorzugsweise ist das Begrenzungssignal als ein Binärsignal ausgebildet. Vorzugsweise weist das Begrenzungssignal zumindest eine insbesondere nur zur Korrelation vorgesehene Eigenschaft auf. Diese Eigenschaft dient für sich alleine genommen nicht der Datenübertragung. Unter einem "Binärsignal" soll insbesondere ein Signal verstanden werden, das genau eine aus zwei verschiedenen Informationszuständen zusammengesetzte Information aufweist. Vorzugsweise weist das Begrenzungssignal eine sich periodisch wiederholende binäre Abfolge auf. Unter dem Begriff "aussenden" soll insbesondere verstanden werden, dass die Begrenzungsleitereinheit eine Leistung des Begrenzungssignals in einen die Begrenzungsleitereinheit umgebenden Raum abgibt. Insbesondere soll unter "teilselbstständig" in diesem Zusammenhang verstanden werden, dass die mobile Einheit auf Grund von Informationen, die sie selbst gesammelt hat, zumindest ein Vorgehen bestimmt. Insbesondere bestimmt die mobile Einheit aufgrund einer Information ein Vorgehen, das von einer Bewegung relativ zur Begrenzungsleitereinheit, insbesondere von einem Erreichen der Begrenzung, abhängig ist. Vorzugsweise bestimmt die mobile Einheit zumindest eine Kenngröße eines Weges, den sie zurücklegt. Beispielsweise könnte die mobile Einheit bei einem Erreichen der Begrenzung wenden. Unter "mobil" soll hier verstanden werden, dass sich die Einheit in zumindest einem Zeitraum relativ zu der Begrenzungsleitereinheit bewegt. Vorzugsweise umfasst die Einheit eine Antriebseinheit, die dazu vorgesehen ist, die mobile Einheit relativ zu der Begrenzungsleitereinheit fortzubewegen. Vorteilhaft umfasst die mobile Einheit ein Koppelmittel zur insbesondere von einem Bediener lösbaren Kopplung mit einem mobilen Gegenstand und/oder vorteilhaft mit einem Tier. Vorzugsweise erledigt die Einheit bei einem Betrieb innerhalb des Bereichs eine Arbeit. Alternativ oder zusätzlich könnte die mobile Einheit dazu vorgesehen sein, einer Bewegung eines Gegenstands und/oder vorteilhaft eines Tiers aus dem von der Begrenzungsleitereinheit begrenzten Bereich heraus entgegenzuwirken. Beispielsweise könnte die Einheit als ein Rasenmähroboter, als ein Putzroboter und/oder als eine andere, dem Fachmann als sinnvoll erscheinende Einheit ausgebildet sein. Alternativ könnte die Einheit beispielsweise als ein Halsband für einen Hund und/oder eine Katze ausgebildet ein. Vorzugsweise weist die mobile Einheit eine kabellose Energieversorgung, insbesondere einen Akku, auf. Unter einer "Begrenzung" soll insbesondere eine Ebene verstanden werden, die einen Bereich, in den sich die mobile Einheit bei einem Betrieb bewegt, auf zumindest einer Seite abschließt. Vorzugsweise umschließt die Begrenzung einen Bereich um 360 Grad. Unter einer "Kreuzkorrelation" soll insbesondere ein Vergleich zweier Signale auf Ähnlichkeit verstanden werden, wobei die Signale gegeneinander zeitlich verschoben werden. Unter einer "Empfangseinheit" soll eine Einheit verstanden werden, die dazu vorgesehen ist, eine von der Begrenzungsleitereinheit ausgestrahlte Leistung zu empfangen. Vorzugsweise weist die Empfangseinheit zumindest eine Spule auf, die die von der Begrenzungsleitereinheit ausgestrahlte Leistung bei einem Betrieb empfängt. Insbesondere variiert die Begrenzungsleitereinheit das Begrenzungssignal zur Datenübertragung. Beispielsweise könnte die Begrenzungsleitereinheit das Begrenzungssignal analog und/oder digital Frequenz-, Amplituden- und/oder Phasenmodulieren. Durch die erfindungsgemäße Ausgestaltung des Systems kann eine besonders störsichere Begrenzung mit einer konstruktiv einfachen und ebenfalls besonders störsicheren Datenübertragung erreicht werden.

In einer weiteren Ausgestaltung wird vorgeschlagen, dass die Begrenzungsleitereinheit dazu vorgesehen ist, das Begrenzungssignal auszusenden, das als ein Pseudozufallssignal ausgebildet ist, wodurch eine geringe Störempfindlichkeit gegenüber schmalbandigen Störern erreicht werden kann. Insbesondere soll unter einem "Pseudozufallssignal" ein Signal verstanden werden, das eine Autokorrelation mit einem Hauptmaximum aufweist, das wenigstens doppelt so groß ist, vorteilhaft wenigstens vier Mal so groß ist, wie gegebenenfalls vorhandene Nebenmaxima der Autokorrelation. Bevorzugt weist das Begrenzungssignal eine statistische Eigenschaft von weißem Rauschen auf. Vorteilhaft weist das Begrenzungssignal ein binäres Bitmuster auf. Insbesondere ist das Begrenzungssignal als ein dem Fachmann als sinnvoll erscheinendes Begrenzungssignals ausgebildet, vorzugsweise jedoch als eine JPL-Folge und/oder besonders bevorzugt als eine Gold-Folge.

Insbesondere soll unter einem "Begrenzungsleiter" ein elektrisch leitendes Kabel verstanden werden, das entlang der Begrenzung verläuft. Unter einer "Leiterschleife" soll ein elektrisch leitendes Kabel verstanden werden, das eine Fläche umschließt. Vorzugsweise ist der Begrenzungsleiter dazu vorgesehen, eine Fläche größer als 5 m², besonders vorteilhaft größer als 20 m², zu umschließen. Vorzugsweise bildet die umschlossene Fläche den von der Begrenzungsleitereinheit begrenzten Bereich. Dabei ist der Begrenzungsleiter vorteilhaft einige Zentimeter in einen Boden des begrenzten Bereichs eingelassen. Alternativ oder zusätzlich könnte der Begrenzungsleiter auf dem Boden aufliegen und insbesondere in ein den Boden bedeckendes Grün eingewachsen sein.

Des Weiteren wird vorgeschlagen, dass die Empfangseinheit dazu vorgesehenen ist, einen induktiven Anteil des Begrenzungssignals zu erfassen, wodurch eine besonders kleine Antenne, insbesondere eine Spule, verwendet werden kann. Insbesondere weist die Empfangseinheit eine Antenne, vorzugsweise mehrere Antennen, auf. Unter einem "induktiven Anteil" soll insbesondere verstanden werden, dass die Empfangseinheit dazu vorgesehen ist, ein induktives Feld und/oder eine inaktive Komponente eines elektromagnetischen Feldes zu empfangen. Vorzugsweise ist die Empfangseinheit bei einem Betrieb in einem Nahfeld der Begrenzungsleitereinheit angeordnet. Unter einem "Nahfeld" soll insbesondere ein Feld in einem Abstand zu einem Sender des Feldes verstanden werden, der kleiner ist als zwei Mal eine mittlere Wellenlänge des Feldes.

Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Insbesondere soll unter einem "Korrelationsbitmuster" eine Abfolge von Bits verstanden werden, die in zumindest einem Betriebszustand einem von dem Begrenzungssignal übertragenen Bitmuster gleicht. Vorzugsweise ist die Recheneinheit dazu vorgesehen, das Korrelationsbitmuster zu erzeugen und/oder zu speichern. Unter "auswerten" soll insbesondere verstanden werden, dass die Recheneinheit aus zumindest einer Eigenschaft des Begrenzungssignals zumindest eine Information über einen Standort relativ zu der Begrenzungsleitereinheit ermittelt.

Insbesondere ist eine Datenübertragung ohne eine Synchronisation auf einen mit dem Begrenzungssignal übertragen Takt möglich. Des Weiteren kann konstruktiv einfach verhindert werden, dass ein Befehl die mobile Einheit durch eine zeitlich begrenzte Störung nicht erreicht, wodurch vorteilhaft auf einen Rückkanal verzichtet werden kann. Insbesondere sollen unter "unterschiedlichen Korrelationsbitmustern" Bitmuster verstanden werden, die zueinander zumindest im Wesentlichen orthogonal sind. Das heißt insbesondere, dass bei einer Korrelation zweier gleicher Bitmuster ein Hauptmaximum eines Ergebnisses, wenigstens doppelt so groß, vorteilhaft 4 Mal so groß ist, wie bei einer Korrelation zweier orthogonaler Bitmuster. Insbesondere ist die Recheneinheit dazu vorgesehen, einen Zeitabschnitt des Begrenzungssignals mit dem ersten Korrelationsbitmuster und dem zweiten Korrelationsbitmuster zu korrelieren. Alternativ ist die Recheneinheit dazu vorgesehen, einen ersten Zeitabschnitt des Begrenzungssignals mit dem ersten Korrelationsbitmuster und einen zweiten Zeitabschnitt des Begrenzungssignals mit dem zweiten Korrelationsbitmuster zu korrelieren.

Vorzugsweise verursacht der Befehl eine, dem Fachmann als sinnvoll erscheinende Reaktion der mobilen Einheit, beispielsweise einen bestimmten Punkt anfahren, Nothalt und/oder Futter essen kommen. Vorzugsweise wird das Korrelationsbitmuster, das einem Befehl zugeordnet ist, während einer gesamten Ausführung des Befehls gesendet. Alternativ könnte das Korrelationsbitmuster, das einem Befehl zuordnet ist, bis zu einer Bestätigung und/oder einen vorgesehenen Zeitraum lang ausgesendet werden.

Des Weiteren wird vorgeschlagen, dass die Recheneinheit dazu vorgesehen ist, einen durch zumindest zwei unterschiedliche Phasenwinkel eines Bitmusters des Begrenzungssignals übertragenen Befehl zu erfassen, wodurch konstruktiv einfach eine hohe Datenübertragungsgeschwindigkeit möglich ist. Unter einem "Phasenwinkel" soll insbesondere verstanden werden, dass die Begrenzungsleitereinheit einen Zeitpunkt einer Aussendung eines bestimmten Bits des Bitmusters innerhalb einer Periode gegenüber einer vorherigen Periode des Bitmusters verschiebt.

Zudem geht die Erfindung aus von einer selbstständigen, insbesondere der zuvor bereits genannten, mobilen Einheit eines erfindungsgemäßen Systems, die sich in zumindest einem Zustand in einem vorgesehenen, auf zumindest einer Seite von einer, insbesondere der zuvor bereits genannten, Begrenzungsleitereinheit begrenzten Bereich frei bewegt, mit zumindest einer, insbesondere der zuvor bereits genannten, Empfangseinheit, mittels der sie ein, insbesondere das zuvor bereits genannte, Begrenzungssignal empfängt, und mit zumindest einer, insbesondere der zuvor bereits genannten, Recheneinheit, die dazu vorgesehen ist, das Begrenzungssignal durch eine Kreuzkorrelation mit einem Korrelationsbitmuster auszuwerten, und wobei die Recheneinheit durch eine Auswertung des Begrenzungssignals eine Kenngröße ermittelt, die zumindest eine Überschreitung der Begrenzung bei der Überschreitung signalisiert, wobei von der mobilen Einheit auch Daten durch das Begrenzungssignal empfangen werden, wobei eine Datenübertragung eine Übertragung von zumindest einer Information von der Begrenzungsleitereinheit zu der mobilen Einheit ist, wobei die Recheneinheit dazu vorgesehen ist, zumindest zwei unterschiedliche Korrelationsbitmuster für die Kreuzkorrelation zu erzeugen, und dazu vorgesehen ist, bei einem Betrieb das empfangene Begrenzungssignal mit dem ersten Korrelationsbitmuster und dem zweiten Korrelationsbitmuster zu korrelieren, wobei die Recheneinheit dem ersten Korrelationsbitmuster einen Arbeitsmodus zuordnet, wobei der Arbeitsmodus eine Datenübertragung ist, die den Betriebszustand der mobilen Einheit bestimmt, bei dem die mobile Einheit eine Aufgabe erledigt, und dem zweiten Korrelationsbitmuster einen Befehl zuordnet, wobei der Befehl eine Datenübertragung ist, die ein Verhalten der mobilen Einheit beeinflusst.

Außerdem geht die Erfindung aus von einem Verfahren mit zumindest einer, insbesondere der zuvor bereits genannten, Begrenzungsleitereinheit, die bei einem Betrieb ein, insbesondere das zuvor bereits genannte, Begrenzungssignal aussendet, und mit einer zumindest teilselbstständigen, mobilen Einheit, die sich in zumindest einem Zustand in einem vorgesehenen, auf zumindest einer Seite von der Begrenzungsleitereinheit begrenzten Bereich frei bewegt, wobei die mobile Einheit mittels einer, insbesondere der zuvor bereits genannten, Empfangseinheit das Begrenzungssignal empfängt, wobei die mobile Einheit eine, insbesondere die zuvor bereits genannte, Recheneinheit aufweist, mittels der sie das Begrenzungssignal durch eine Kreuzkorrelation mit einem Korrelationsbitmuster auswertet, und wobei die Recheneinheit durch eine Auswertung des Begrenzungssignals eine Kenngröße ermittelt, die zumindest eine Überschreitung der Begrenzung bei der Überschreitung signalisiert, wobei die Begrenzungsleitereinheit zumindest einen, insbesondere den zuvor bereits genannten Begrenzungsleiter aufweist, der zumindest eine, insbesondere die zuvor bereits genannte, Leiterschleife bildet, um eine zuverlässige Begrenzung und eine induktive Datenübertragung zu ermöglichen, wobei von der mobilen Einheit auch Daten durch das Begrenzungssignal empfangen werden, wobei die Datenübertragung eine Übertragung von zumindest einer Information von der Begrenzungsleitereinheit zu der mobilen Einheit ist.

Es wird vorgeschlagen, dass die Recheneinheit zumindest zwei unterschiedliche Korrelationsbitmuster erzeugt und bei einem Betrieb das empfangene Begrenzungssignal mit dem ersten Korrelationsbitmuster und dem zweiten Korrelationsbitmuster korreliert, wobei die Recheneinheit dem ersten Korrelationsbitmuster einen Arbeitsmodus zuordnet, wobei der Arbeitsmodus eine Datenübertragung ist, die den Betriebszustand der mobilen Einheit bestimmt, bei dem die mobile Einheit eine Aufgabe erledigt, und dem zweiten Korrelationsbitmuster einen Befehl zuordnet, wobei der Befehl eine Datenübertragung ist, die ein Verhalten der mobilen Einheit beeinflusst.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Fig. 1: ein erfindungsgemäßes System mit einer Begrenzungsleitereinheit und einer mobilen Einheit,
- Fig. 2: ein von der mobilen Einheit empfangenes Begrenzungssignal und eine Abtastung des Begrenzungssignals,
- Fig. 3: Ergebnisse einer Kreuzkorrelation des empfangenen Begrenzungssignals mit Korrelationsbitmusteren eines ersten und eines zweiten Ausführungsbeispiels und
- Fig. 4: ein Ablaufplan eines Betriebs und einer Datenübertragung des Systems aus Figur 1 des ersten Ausführungsbeispiels.

### Beschreibung der Ausführungsbeispiele

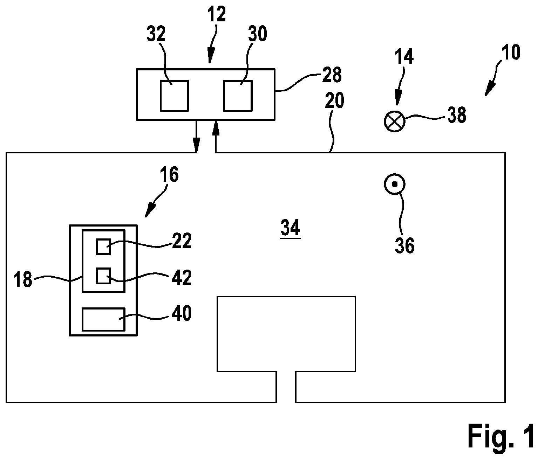

Figur 1 zeigt ein System 10 mit einer Begrenzungsleitereinheit 12 und einer selbstständigen, mobilen Einheit 16. Die Begrenzungsleitereinheit 12 umfasst einen Begrenzungsleiter 20 und eine Basisstation 28. Die Basisstation 28 weist eine Eingabeeinheit 30 und einen Signalgenerator 32 auf. Der Signalgenerator 32 koppelt bei einem Betrieb ein Begrenzungssignal 14 auf den Begrenzungsleiter 20. Das Begrenzungssignal 14 ist als ein Pseudozufallssignal ausgebildet. Dazu weist der Signalgenerator 32 einen nicht näher dargestellten Code-Generator auf, der dazu vorgesehen ist, Gold-Folgen zu generieren. Der Begrenzungsleiter 20 bildet eine Leiterschleife, die einen Bereich 34 umschließt. Eine Einkopplung des Begrenzungssignals 14 in den Begrenzungsleiter 20 verursacht einen elektrischen Strom in dem Begrenzungsleiter 20. Der elektrische Strom verursacht ein magnetisches Feld 36 in dem Bereich 34 innerhalb des Begrenzungssignals 14 und ein magnetisches Feld 38 außerhalb der Leiterschleife des Begrenzungsleiters 20. Die magnetischen Felder 36, 38 weisen relativ zu einer von dem Bereich 34 aufgespannten Ebene gegensätzliche Richtungen auf.

Die mobile Einheit 16 ist als ein selbstständiger Rasenmäher ausgebildet. Die mobile Einheit 16 mäht bei einem Betrieb den von dem Begrenzungsleiter 20 begrenzten Bereich selbsttätig. Die mobile Einheit 16 weist eine Empfangseinheit 18 und eine Antriebseinheit 40 auf. Die Antriebseinheit 40 bewegt die mobile Einheit bei einem Betrieb. Die Empfangseinheit 18 weist eine Recheneinheit 22 und eine Antenne 42 auf. Die Antenne 42 ist als eine Spule ausgebildet. Somit erfasst die Antenne 42 der Empfangseinheit 18 einen induktiven Anteil des Begrenzungssignals 14. Die Recheneinheit 22 ist als ein Microcontroller ausgebildet. Sie umfasst in einem betriebsbereiten Zustand eine Korrelationsrechenroutine, die dazu vorgesehen ist, eine Kreuzkorrelation zwischen einem Korrelationsbitmuster und dem empfangenen Begrenzungssignal 14 durchzuführen. Dazu weist die Recheneinheit 22 einen hier nicht näher dargestellten Code-Generator auf, der dazu vorgesehen ist, Gold-Folgen zu generieren. Der Code-Generator der Recheneinheit 22 generiert in zumindest einem Betriebszustand einen gleichen Code wie der Code-Generator der Begrenzungsleitereinheit 12.

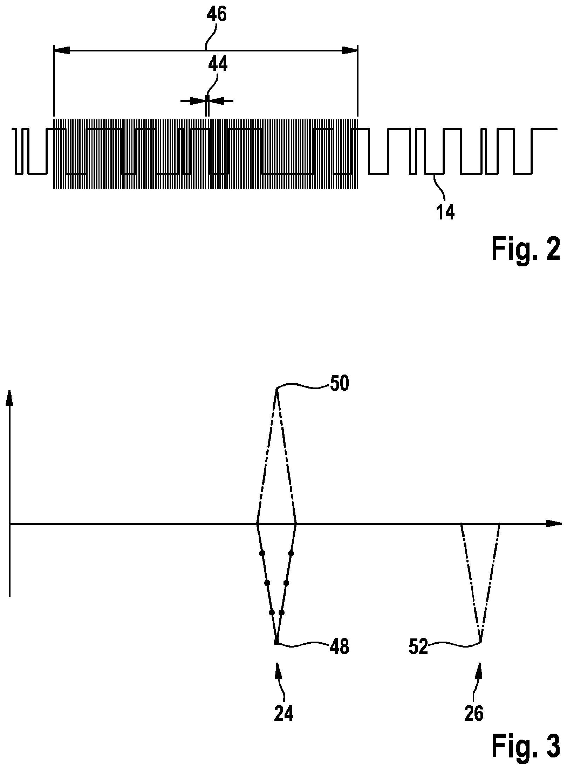

Die Recheneinheit 22 weist einen nicht näher dargestellten Analog-Digitalwandler auf, der das empfangene Begrenzungssignal 14 mit einer Abtastperiode 44 wie in Figur 2 dargestellt digitalisiert. Das dargestellte, empfangene Begrenzungssignal 14 weist Störungen auf. Die Abtastperiode 44 des Analog-Digitalwandlers ist kleiner als eine Periode eines Bits des Begrenzungssignals 14. Die Recheneinheit 22 korreliert periodisch einen Zeitabschnitt 46 des Begrenzungssignals 14 mit dem generierten Korrelationsbitmuster, das einem Bitmuster des Begrenzungssignals 14 gleicht. Mögliche Ergebnisse der Korrelation sind in der Figur 3 ohne mögliche Störungen dargestellt. Die Ergebnisse weisen wenn die Empfangseinheit das Begrenzungssignal 14 empfängt und das Bitmuster des Begrenzungssignals 14 und das Korrelationsbitmuster übereinstimmen jeweils ein positives oder negatives Maximum 48, 50, 52 auf. Wenn die mobile Einheit innerhalb des begrenzten Bereichs 34 angeordnet ist, weisen die Ergebnisse der periodisch wiederholten Korrelation beispielsweise jeweils ein negatives Maximum 48 auf. Wenn die mobile Einheit 16 den begrenzten Bereich 34 verlassen hat, weisen die Ergebnisse der periodisch wiederholten Korrelation in diesem Fall jeweils ein positives Maximum 50 auf, weil die von der Empfangseinheit 18 empfangenen magnetischen Felder 36, 38 innerhalb und außerhalb des Bereichs 34 unterschiedliche Richtungen aufweisen.

Die Eingabeeinheit 30 weist ein nicht näher dargestelltes Bedienelement auf, mittels dessen der Bediener einen Befehl an die mobile Einheit 16 geben kann. Zur Übertragung des Befehls verändert der Signalgenerator 32 das ausgesendete Begrenzungssignal 14. Somit weist das Begrenzungssignal 14 bei der Übertragung des Befehls Daten auf, die dem Befehl zugeordnet sind. Die Empfangseinheit 18 der mobilen Einheit 16 wertet das Begrenzungssignal 14 aus und empfängt somit die Datenübertragung durch das Begrenzungssignal 14.

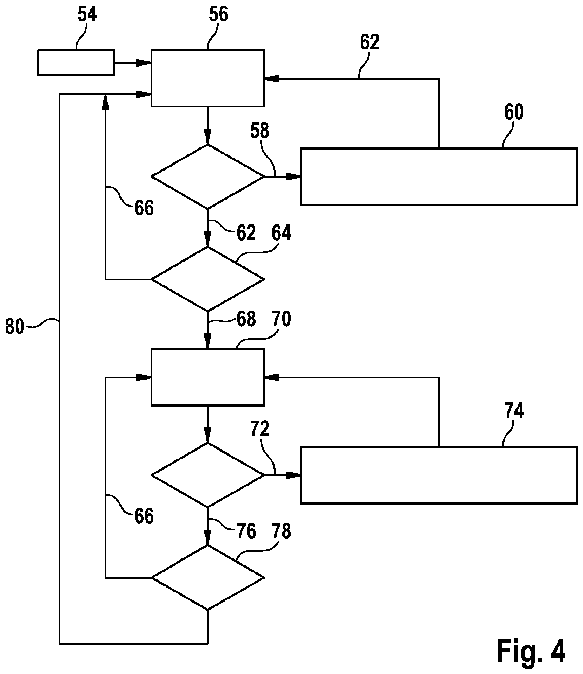

In einem ersten Ausführungsbeispiel generiert der Signalgenerator 32 der Begrenzungsleitereinheit 12 zur Datenübertragung unterschiedliche Bitmuster. Die Bitmuster sind unterschiedlichen Befehlen und/oder Betriebszuständen zugeordnet. Die Recheneinheit 22 der mobilen Einheit 16 erzeugt bei einem Betrieb unterschiedliche Korrelationsbitmuster für die Kreuzkorrelation. In Figur 4 ist ein möglicher Betriebsablauf dargestellt.

Nach einer Initialisierung 54 beginnt die Recheneinheit 22 mittels der Korrelation mit einem Arbeitsbitmuster eine Suche 56 nach einem Arbeitsbitmuster. Dabei stoppt die Recheneinheit 22 über die Antriebseinheit 40 die mobile Einheit 16. Wenn die Recheneinheit 22 das Arbeitsbitmuster gefunden hat 58, beginnt die mobile Einheit 16 mit Arbeiten 60. Dabei korreliert die Recheneinheit 22 weiterhin das empfangene Signal mit dem Arbeitsbitmuster. Wenn die Recheneinheit 22 das Arbeitsbitmuster nicht mehr in dem empfangenen Signal findet 62, stoppt die Recheneinheit 22 die mobile Einheit 16. Die Recheneinheit 22 beginnt erneut die Suche 56 nach dem Arbeitsbitmuster.

Wenn die Recheneinheit 22 das Arbeitsbitmuster nicht findet 62, überprüft die Recheneinheit 22 ob eine vorgesehene maximale Suchdauer abgelaufen ist 64. Wenn die maximale Suchdauer nicht abgelaufen ist 66, sucht 56 die Recheneinheit 22 weiter in dem Begrenzungssignal 14 nach dem Arbeitsbitmuster. Wenn die maximale Suchdauer nach dem Arbeitsbitmuster, hier beispielsweise eine Sekunde, abgelaufen ist 68, sucht 70 die Recheneinheit 22 mittels der Korrelation mit einem Befehlsbitmuster nach einem weiteren Befehl, beispielsweise nach einem Rückkehrbefehl. Während der Suche nach dem Befehlsbitmuster steht die mobile Einheit 16.

Wenn die Recheneinheit 22 das Befehlsbitmuster gefunden hat 72, führt die mobile Einheit 16 den Befehl aus 74. Wenn die Recheneinheit 22 das Befehlsbitmuster nicht findet 76, überprüft die Recheneinheit 22, ob eine vorgesehene maximale Suchdauer abgelaufen 78 ist. Wenn die maximale Suchdauer nach dem Befehlsbitmuster abgelaufen 80 ist, sucht 56 die Recheneinheit 22 hier wieder das Arbeitsbitmuster. Alternativ könnte die Recheneinheit 22 zunächst ein weiteres Befehlsbitmuster oder mehrere weitere Befehlsbitmuster nach dem gleichen Prinzip suchen.

Die Eingabeeinheit 30 der Begrenzungsleitereinheit 12 weist ein nicht näher dargestelltes Bedienelement auf, das eine Aussendung des Arbeitsbitmusters unterbricht, wodurch konstruktiv einfach ein Stoppen und/oder Pausieren der mobilen Einheit 16 möglich ist. Des Weiteren weist die Eingabeeinheit 30 der Begrenzungsleitereinheit 12 ein nicht näher dargestelltes Bedienelement auf, mittels dessen der Bediener das Arbeitsbitmuster von einem Betrieb wählen kann. Alternativ könnte ein Arbeitsbitmuster ab Werk in einer Begrenzungsleitereinheit und einer mobilen Einheit voreingestellt sein. In einer weiteren Alternative könnte eine Begrenzungsleitereinheit ein Arbeitsbitmuster selbsttätig wählen, insbesondere zufällig und/oder indem die Begrenzungsleitereinheit in einem von dem Begrenzungsleiter aufgefangenen Signal nach eventuell von anderen Systemen besetzten Arbeitsbitmustern durchsucht.

Die mobile Einheit 16 detektiert bei einer Inbetriebnahme das Arbeitsbitmuster, indem sie eine Menge von Bitmustern nach dem von der Begrenzungsleitereinheit ausgesendeten Bitmuster durchsucht. Alternativ könnte ein Bediener das Arbeitsbitmuster manuell in eine mobile Einheit eingeben. Die Befehlsbitmuster sind von dem Arbeitsbitmuster abhängig gewählt. Alternativ könnte jedes von dem Arbeitsbitmuster abweichende ausgewählte Bitmuster einem gleichen Befehl, insbesondere einem Rückkehrbefehl, zugeordnet sein.

In einem alternativen Ausführungsbeispiel könnte eine Recheneinheit 22 einer mobilen Einheit 16 eines Systems 10 einen Befehl erfassen, der durch zwei unterschiedliche Phasenwinkel 24, 26 eines einzelnen Bitmusters eines Begrenzungssignals 14 übertragen wird. Die Phasenwinkel 24, 26 des Begrenzungssignals 14 zeigen sich in einem Ergebnis einer Korrelation durch eine unterschiedliche Anordnung der Maxima 48, 52. Die Recheneinheit 22 korreliert das empfangene Begrenzungssignal 14 mit einem Korrelationsbitmuster, das dem Bitmuster des Begrenzungssignals 14 entspricht. Hier korreliert die Recheneinheit 22 periodisch Zeitabschnitte des Begrenzungssignals 14 mit einem Korrelationsbitmuster, die einer Periode des Bitmusters des Begrenzungssignals 14 entsprechen. Eine Begrenzungsleitereinheit 12 des Systems 10 variiert einen Phasenwinkel des Bitmusters des Begrenzungssignals 14. Wie in Figur 3 dargestellt verschiebt sich dadurch eine Position eines Maximums eines Ergebnisses der Korrelation. Das Begrenzungssignal 14 überträgt dadurch Daten an die mobile Einheit 16.

## Patentansprüche

1. System mit einer Begrenzungsleitereinheit (12), die dazu vorgesehen ist, ein Begrenzungssignal (14) auszusenden, und mit einer zumindest teilselbstständigen, mobilen Einheit (16), die sich in zumindest einem Zustand in einem vorgesehenen, auf zumindest einer Seite von der Begrenzungsleitereinheit (12) begrenzten Bereich frei bewegt, wobei die mobile Einheit (16) zumindest eine Empfangseinheit (18) aufweist, mittels der sie das Begrenzungssignal (14) empfängt, wobei die mobile Einheit (16) eine Recheneinheit (22) aufweist, die dazu vorgesehen ist, das Begrenzungssignal (14) durch eine Kreuzkorrelation mit einem Korrelationsbitmuster auszuwerten, und wobei die Recheneinheit (22) durch eine Auswertung des Begrenzungssignals (14) eine Kenngröße ermittelt, die zumindest eine Überschreitung der Begrenzung bei der Überschreitung signalisiert, wobei die Begrenzungsleitereinheit (12) zumindest einen Begrenzungsleiter (20) aufweist, der zumindest eine Leiterschleife bildet, um eine zuverlässige Begrenzung und eine induktive Datenübertragung zu ermöglichen, wobei von der mobilen Einheit (16) auch Daten durch das Begrenzungssignal (14) empfangen werden, wobei die Datenübertragung eine Übertragung von zumindest einer Information von der Begrenzungsleitereinheit (12) zu der mobilen Einheit (16) ist, **dadurch gekennzeichnet, dass** die Recheneinheit (22) dazu vorgesehen ist, zumindest zwei unterschiedliche Korrelationsbitmuster für die Kreuzkorrelation zu erzeugen, und dazu vorgesehen ist, bei einem Betrieb das empfangene Begrenzungssignal (14) mit dem ersten Korrelationsbitmuster und dem zweiten Korrelationsbitmuster_zu korrelieren, wobei die Recheneinheit (22) dem ersten Korrelationsbitmuster einen Arbeitsmodus zuordnet, wobei der Arbeitsmodus eine Datenübertragung ist, die den Betriebszustand der mobilen Einheit (16) bestimmt, bei dem die mobile Einheit (16) eine Aufgabe erledigt, und dem zweiten Korrelationsbitmuster einen Befehl zuordnet, wobei der Befehl eine Datenübertragung ist, die ein Verhalten der mobilen Einheit (16) beeinflusst.

2. System nach Anspruch 1, **dadurch gekennzeichnet, dass** die Begrenzungsleitereinheit (12) dazu vorgesehen ist, das Begrenzungssignal (14) auszusenden, das als ein Pseudozufallssignal ausgebildet ist.

3. System nach einem der vorhergehenden Ansprüche, **dadurch gekennzeichnet, dass** die Empfangseinheit (18) dazu vorgesehenen ist, einen induktiven Anteil des Begrenzungssignals (14) zu erfassen.

4. System nach einem der vorhergehenden Ansprüche, **dadurch gekennzeichnet, dass** die Recheneinheit (22) dazu vorgesehen ist, einen durch zumindest zwei unterschiedliche Phasenwinkel (24, 26) eines Bitmusters des Begrenzungssignals (14) übertragenen Befehl zu erfassen.

5. Mobile Einheit (16) eines Systems (10) zumindest nach Anspruch 1, die sich in zumindest einem Zustand in einem vorgesehenen, auf zumindest einer Seite von einer Begrenzungsleitereinheit (12) begrenzten Bereich frei bewegt, mit zumindest einer Empfangseinheit (18), mittels der sie ein Begrenzungssignal (14) empfängt, und mit zumindest einer Recheneinheit (22), die dazu vorgesehen ist, das Begrenzungssignal (14) durch eine Kreuzkorrelation mit einem Korrelationsbitmuster auszuwerten, und wobei die Recheneinheit (22) durch eine Auswertung des Begrenzungssignals (14) eine Kenngröße ermittelt, die zumindest eine Überschreitung der Begrenzung bei der Überschreitung signalisiert, wobei von der mobilen Einheit (16) auch Daten durch das Begrenzungssignal (14) empfangen werden, wobei eine Datenübertragung eine Übertragung von zumindest einer Information von der Begrenzungsleitereinheit (12) zu der mobilen Einheit (16) ist, wobei die Recheneinheit (22) dazu vorgesehen ist, zumindest zwei unterschiedliche Korrelationsbitmuster für die Kreuzkorrelation zu erzeugen, und dazu vorgesehen ist, bei einem Betrieb das empfangene Begrenzungssignal (14) mit dem ersten Korrelationsbitmuster und dem zweiten Korrelationsbitmuster zu korrelieren, wobei die Recheneinheit (22) dem ersten Korrelationsbitmuster einen Arbeitsmodus zuordnet, wobei der Arbeitsmodus eine Datenübertragung ist, die den Betriebszustand der mobilen Einheit (16) bestimmt, bei dem die mobile Einheit (16) eine Aufgabe erledigt, und dem zweiten Korrelationsbitmuster einen Befehl zuordnet, wobei der Befehl eine Datenübertragung ist, die ein Verhalten der mobilen Einheit (16) beeinflusst.

6. Verfahren mit zumindest einer Begrenzungsleitereinheit (12), die bei einem Betrieb ein Begrenzungssignal (14) aussendet, und mit einer zumindest teilselbstständigen, mobilen Einheit (16), die sich in zumindest einem Zustand in einem vorgesehenen, auf zumindest einer Seite von der Begrenzungsleitereinheit (12) begrenzten Bereich frei bewegt, wobei die mobile Einheit (16) mittels einer Empfangseinheit (18) das Begrenzungssignal (14) empfängt, wobei die mobile Einheit (16) eine Recheneinheit (22) aufweist, mittels der sie das Begrenzungssignal (14) durch eine Kreuzkorrelation mit einem Korrelationsbitmuster auswertet, und wobei die Recheneinheit (22) durch eine Auswertung des Begrenzungssignals (14) eine Kenngröße ermittelt, die zumindest eine Überschreitung der Begrenzung bei der Überschreitung signalisiert, wobei die Begrenzungsleitereinheit (12) zumindest einen Begrenzungsleiter (20) aufweist, der zumindest eine Leiterschleife bildet, um eine zuverlässige Begrenzung und eine induktive Datenübertragung zu ermöglichen, wobei von der mobilen Einheit (16) auch Daten durch das Begrenzungssignal (14) empfangen werden, wobei die Datenübertragung eine Übertragung von zumindest einer Information von der Begrenzungsleitereinheit (12) zu der mobilen Einheit (16) ist, **dadurch gekennzeichnet, dass** die Recheneinheit (22) zumindest zwei unterschiedliche Korrelationsbitmuster erzeugt und bei einem Betrieb das empfangene Begrenzungssignal (14) mit dem ersten Korrelationsbitmuster und dem zweiten Korrelationsbitmuster korreliert, wobei die Recheneinheit (22) dem ersten Korrelationsbitmuster einen Arbeitsmodus zuordnet, wobei der Arbeitsmodus eine Datenübertragung ist, die den Betriebszustand der mobilen Einheit (16) bestimmt, bei dem die mobile Einheit (16) eine Aufgabe erledigt, und dem zweiten Korrelationsbitmuster einen Befehl zuordnet, wobei der Befehl eine Datenübertragung ist, die ein Verhalten der mobilen Einheit (16) beeinflusst.

## Claims

1. System having a boundary conductor unit (12) which is provided for emitting a boundary signal (14), and having an at least partially independent mobile unit (16) which moves freely in at least one state in a provided area limited by the boundary conductor unit (12) on at least one side, wherein the mobile unit (16) has at least one receiving unit (18) which is used by the mobile unit to receive the boundary signal (14), wherein the mobile unit (16) has a computing unit (22) which is provided for evaluating the boundary signal (14) by means of a cross-correlation with a correlation bit pattern, and wherein the computing unit (22) determines, by an evaluation of the boundary signal (14), a characteristic variable which signals at least one transgression of the boundary during the transgression, wherein the boundary conductor unit (12) has at least one boundary conductor (20) which forms at least one conductor loop in order to enable a reliable boundary and an inductive data transmission, wherein the mobile unit (16) also receives data through the boundary signal (14), wherein the data transmission is a transmission of at least one item of information from the boundary conductor unit (12) to the mobile unit (16), **characterized in that** the computing unit (22) is provided for generating at least two different correlation bit patterns for the cross-correlation and is provided for correlating the received boundary signal (14) with the first correlation bit pattern and with the second correlation bit pattern during operation, wherein the computing unit (22) allocates an operating mode to the first correlation bit pattern, wherein the operating mode is a data transmission which determines the operating state of the mobile unit (16) in which the mobile unit (16) handles a task, and allocates a command to the second correlation bit pattern, wherein the command is a data transmission which influences a behaviour of the mobile unit (16).

2. System according to Claim 1, **characterized in that** the boundary conductor unit (12) is provided for emitting the boundary signal (14) which is designed as a pseudorandom signal.

3. System according to one of the preceding claims, **characterized in that** the receiving unit (18) is provided for detecting an inductive component of the boundary signal (14).

4. System according to one of the preceding claims, **characterized in that** the computing unit (22) is provided for detecting a command transmitted by at least two different phase angles (24, 26) of a bit pattern of the boundary signal (14).

5. Mobile unit (16) of a system (10) at least according to Claim 1, which moves freely in at least one state in a provided area limited by a boundary conductor unit (12) on at least one side, having at least one receiving unit (18) which is used by the mobile unit to receive a boundary signal (14), and having at least one computing unit (22) which is provided for evaluating the boundary signal (14) by means of a cross-correlation with a correlation bit pattern, and wherein the computing unit (22) determines, by an evaluation of the boundary signal (14), a characteristic variable which signals at least one transgression of the boundary during the transgression, wherein the mobile unit (16) also receives data through the boundary signal (14), wherein a data transmission is a transmission of at least one item of information from the boundary conductor unit (12) to the mobile unit (16), wherein the computing unit (22) is provided for generating at least two different correlation bit patterns for the cross-correlation and is provided for correlating the received boundary signal (14) with the first correlation bit pattern and with the second correlation bit pattern during operation, wherein the computing unit (22) allocates an operating mode to the first correlation bit pattern, wherein the operating mode is a data transmission which determines the operating state of the mobile unit (16) in which the mobile unit (16) handles a task, and allocates a command to the second correlation bit pattern, wherein the command is a data transmission which influences a behaviour of the mobile unit (16).

6. Method with at least one boundary conductor unit (12) which emits a boundary signal (14) during operation, and with an at least partially independent mobile unit (16) which moves freely in at least one state in a provided area limited by the boundary conductor unit (12) on at least one side, wherein the mobile unit (16) uses a receiving unit (18) to receive the boundary signal (14), wherein the mobile unit (16) has a computing unit (22) which is used by the mobile unit to evaluate the boundary signal (14) by means of a cross-correlation with a correlation bit pattern, and wherein the computing unit (22) determines, by an evaluation of the boundary signal (14), a characteristic variable which signals at least one transgression of the boundary during the transgression, wherein the boundary conductor unit (12) has at least one boundary conductor (20) which forms at least one conductor loop in order to enable a reliable boundary and an inductive data transmission, wherein the mobile unit (16) also receives data through the boundary signal (14), wherein the data transmission is a transmission of at least one item of information from the boundary conductor unit (12) to the mobile unit (16), **characterized in that** the computing unit (22) generates at least two different correlation bit patterns and correlates the received boundary signal (14) with the first correlation bit pattern and with the second correlation bit pattern during operation, wherein the computing unit (22) allocates an operating mode to the first correlation bit pattern, wherein the operating mode is a data transmission which determines the operating state of the mobile unit (16) in which the mobile unit (16) handles a task, and allocates a command to the second correlation bit pattern, wherein the command is a data transmission which influences a behaviour of the mobile unit (16).

## Revendications

1. Système comprenant une unité formant conducteur de délimitation (12) qui est prévue pour envoyer un signal de délimitation (14), et une unité mobile (16), au moins en partie indépendante, qui se déplace librement, dans au moins un état, dans une zone prévue délimitée sur au moins un côté par l'unité formant conducteur de délimitation (12), l'unité mobile (16) comportant au moins une unité de réception (18) permettant de recevoir le signal de limitation (14), l'unité mobile (16) comportant une unité de calcul (22) qui est prévue pour évaluer le signal de délimitation (14) par corrélation croisée avec un motif de bits de corrélation, et l'unité de calcul (22) déterminant un paramètre caractéristique en évaluant le signal de délimitation (14) qui signale au moins un franchissement de la délimitation au moment du franchissement, l'unité formant conducteur de délimitation (12) comportant au moins un conducteur de délimitation (20) qui forme au moins une boucle de conducteur pour permettre une délimitation fiable et une transmission de données par induction, l'unité mobile (16) recevant également des données par le biais du signal de délimitation (14), la transmission de données étant une transmission d'au moins une information de l'unité formant conducteur de délimitation (12) à l'unité mobile (16), **caractérisé en ce que** l'unité de calcul (22) est prévue pour générer au moins deux motifs de bits de corrélation différents destinés à la corrélation croisée, et pour cela est prévue pour corréler le signal de délimitation reçu (14) au premier motif de bits de corrélation et au deuxième motif de bits de corrélation pendant le fonctionnement, l'unité de calcul (22) associant un mode de travail au premier motif de bits de corrélation, le mode de travail étant une transmission de données qui détermine l'état de fonctionnement de l'unité mobile (16) dans lequel l'unité mobile (16) effectue une tâche, et associant une instruction au deuxième motif de bits de corrélation, l'instruction étant une transmission de données qui influe sur le comportement de l'unité mobile (16).

2. Système selon la revendication 1, **caractérisé en ce que** l'unité formant conducteur de délimitation (12) est prévue pour émettre le signal de délimitation (14) qui est conçu comme un signal pseudo-aléatoire.

3. Système selon l'une des revendications précédentes, **caractérisé en ce que** l'unité de réception (18) est prévue pour détecter une composante inductive du signal de délimitation (14).

4. Système selon l'une des revendications précédentes, **caractérisé en ce que** l'unité de calcul (22) est prévue pour détecter une instruction transmise par au moins deux angles de phase différents (24, 26) d'un motif de bits du signal de délimitation (14).

5. Unité mobile (16) d'un système (10) au moins selon la revendication 1, laquelle se déplace librement, dans au moins un état, dans une zone prévue délimitée sur au moins un côté par une unité formant conducteur de délimitation (12), ladite unité mobile comprenant au moins une unité de réception (18) permettant de recevoir un signal de délimitation (14), et au moins une unité de calcul (22) qui est prévue pour évaluer le signal de délimitation (14) par corrélation croisée avec un motif de bits de corrélation, et l'unité de calcul (22) déterminant un paramètre caractéristique en évaluant le signal de délimitation (14) qui signale au moins un franchissement de la délimitation au moment du franchissement, l'unité mobile (16) recevant également des données par le biais du signal de délimitation (14), une transmission de données étant une transmission d'au moins une information de l'unité formant conducteur de délimitation (12) à l'unité mobile (16), l'unité de calcul (22) étant prévue pour générer au moins deux motifs de bits de corrélation différents destinés à la corrélation croisée, et pour cela étant prévue pour corréler le signal de délimitation reçu (14) au premier motif de bits de corrélation et au deuxième motif de bits de corrélation pendant le fonctionnement, l'unité de calcul (22) associant un mode de travail au premier motif de bits de corrélation, le mode de travail étant une transmission de données qui détermine l'état de fonctionnement de l'unité mobile (16) dans lequel l'unité mobile (16) effectue une tâche, et associant une instruction au deuxième motif de bits de corrélation, l'instruction étant une transmission de données qui influe sur le comportement de l'unité mobile (16).

6. Procédé comprenant au moins une unité formant conducteur de délimitation (12) qui émet un signal de délimitation (14) pendant le fonctionnement, et une unité mobile (16), au moins en partie indépendante, qui se déplace librement, dans au moins un état, dans une zone délimitée sur au moins un côté par l'unité formant conducteur de délimitation (12), l'unité mobile (16) recevant le signal de délimitation (14) au moyen d'une unité de réception (18), l'unité mobile (16) comportant une unité de calcul (22) permettant d'évaluer le signal de limitation (14) par corrélation croisée avec un motif de bits de corrélation, et l'unité de calcul (22) déterminant un paramètre caractéristique en évaluant le signal de délimitation (14) qui signale le franchissement de la délimitation au moment du franchissement, l'unité formant conducteur de délimitation (12) comportant au moins un conducteur de délimitation (20) qui forme au moins une boucle de conducteur pour permettre une délimitation fiable et une transmission de données par induction, l'unité mobile (16) recevant également des données par le biais du signal de délimitation (14), la transmission de données étant une transmission d'au moins une information de l'unité formant conducteur de délimitation (12) à l'unité mobile (16), **caractérisé en ce que** l'unité de calcul (22) génère au moins deux motifs de bits de corrélation différents et corrèle le signal de délimitation reçu (14) au premier motif de bits de corrélation et au deuxième motif de bits de corrélation, l'unité de calcul (22) associant un mode de travail au premier motif de bits de corrélation, le mode de travail étant une transmission de données qui détermine l'état de fonctionnement de l'unité mobile (16) dans lequel l'unité mobile (16) effectue une tâche, et associant une instruction au deuxième motif de bits de corrélation, l'instruction étant une transmission de données qui influe sur le comportement de l'unité mobile (16).
